# EUROPEAN PATENT APPLICATION

(11) **EP 4 627 925 A1**
(43) Date of publication of application: **08.10.2025**
(21) Application number: 25165024.8
(22) Date of filing: 20.03.2025
(51) Int. Cl.: A21C 9/06, A21C 9/08

(54) **DOUGH ROLLING DEVICE AND METHOD FOR THE PRODUCTION OF ENVELOPED DOUGH PRODUCT**

(30) Priority: 20.03.2024 PT 2024119343; 19.03.2025 PT 2025120133
(71) Applicant: Eurofrozen SA, 2814-512 Feijo (PT)
(72) Inventor: Bonito José, Feijo (PT)
(74) Representative: Pereira da Cruz, Joao

(57) **Abstract**

The present invention relates to a device and a method for rolling out and shaping a dough product containing a filling therein. The object of this invention consists of a dough rolling device (100) for the production of enveloped dough product containing a filling therein, comprising at least one conveyor belt (1) configured to support and drive a sheet of dough containing a filling bar placed on top of said sheet of dough; at least one first support frame (2); at least one a second support frame (3); and at least one rolling mat (4) positioned downstream along the at least one conveyor belt (1), comprising a plurality of rollers, said rollers being placed over the surface of the conveyor belt (1) on a flexible frame, said rollers being configured to roll the sheet of dough over the filling bar, thereby forming an enveloped structure around the filling bar. The continuous action of the conveyor belt (1) and of the rolling mat (4) allows the rolled dough products to be consistent and to increase the production of these dough products. The proposed invention aims to solve the limitations of scaled-up production of dough products by providing a device capable of performing the rolling and shaping operations of the dough.

## Description

### FIELD OF THE INVENTION

The present invention relates to a device and a method for rolling out and shaping a dough product containing a filling therein.

### PRIOR ART

The artisanal production of tequeños, a Venezuelan pastry commonly filled with semi-hard cheese, relies on skilled labor to shape and roll dough. The skills required to properly roll and shape these types of filled pastries prevent the proper scale-up of production at an industrial level, usually due to the rolling and shaping operations being often hard to reproduce by machinery. Therefore, due to the hands-on nature of the work, production remains relatively slow, making it difficult to scale up to meet high-demand requirements without sacrificing quality.

In contrast, industrialized mass production of dough products optimizes speed, consistency, and production volume by introducing mechanical automation into the production line.

One of the primary challenges in the artisanal production of dough products is the repetitive manual handling required in rolling and filling dough, in that these repetitive motions increase the risk of injury.

The proposed invention consists in a semi-automatic approach that aims to solve the limitations of industrialized production of tequeños by providing a device capable of performing the rolling and shaping operations required for a consistent and stable production of these dough products.

### SUMMARY OF THE INVENTION

The object of this invention consists of a dough rolling device (100) for the production of enveloped dough product containing a filling therein, comprising at least one conveyor belt (1) configured to support and drive a sheet of dough containing a filling bar placed on top of said sheet of dough, said filling bar being partially encased by said sheet of dough; at least one first support frame (2); at least one a second support frame (3); and at least one rolling mat (4) positioned downstream along the at least one conveyor belt (1), comprising a plurality of rollers, said rollers being placed over the surface of the conveyor belt (1) on a flexible frame, wherein:
- the at least one conveyor belt (1) extends continuously beneath the plurality of rollers of the at least one rolling mat (4), in that the dough product is both rolled and transported simultaneously through said rolling mat (4);
- the at least one conveyor belt (1) drives the sheet of dough and filling bar along its length to the at least one rolling mat (4);
- the plurality rollers are configured to roll the sheet of dough over the filling bar in a direction opposite to the movement driven by the conveyor belt (1), thereby forming an enveloped structure around the filling bar;
- the first support structure is positioned at a proximal end of the rolling mat (4) and comprises a first bar; and the second support structure is positioned at a distal end of the rolling mat (4) and comprises a second, being said first bar and said second bar configured to support the first end bar to support the flexible frame of the rolling mat (4); and
- the first and second bar are positioned perpendicularly to the length of the at least one conveyor belt (1) and are positioned over the surface of said conveyor belt (1) so that a gap is formed between the plurality of rollers and the surface of the at least one conveyor belt (1).

In an advantageous aspect of the present invention, the conveyor belt (1) and the rolling mat (4) provide a uniform rolling action of the sheet of dough, resulting in a tighter wrapping of the filling bar and ensuring an even distribution of dough around the filling bar. In addition, the continuous process allows the increase of production over time by reducing manual handling to the minimum, in that the operator is only required to place the dough sheet on the conveyor belt (1) and manually perform the first fold of the sheet of dough over the filling bar and the manual sealing of the seams present at the ends of the final rolled product.

In a preferred embodiment of the present invention, the dough rolling device (100) comprises at least one guide (5) positioned downstream along the at least one conveyor belt (1) and prior to the at least one rolling mat (4), said guide (5) being configured to diagonally displace the sheet of dough in relation to the direction of the motion provided by said conveyor belt (1).

In an advantageous aspect of the present invention, the guide (5) allows the sheet to be oriented along the conveyor belt (1) in a way that influences the number of folds necessary to fully envelop the filling bar and, ultimately, the shape of the final product.

In an advantageous aspect of the present invention, the plurality of rollers are configured to apply a rolling force to the sheet of dough and filling bar to facilitate a continuous wrapping of the sheet of dough around the filling bar as it advances along the conveyor belt (1), ensuring the quality and consistency of the dough product depending on the properties of the dough, such as consistency, elasticity or water content, or depending on the properties of the filling, such as the shape of the filling bar or its consistency.

### DESCRIPTION OF THE FIGURES

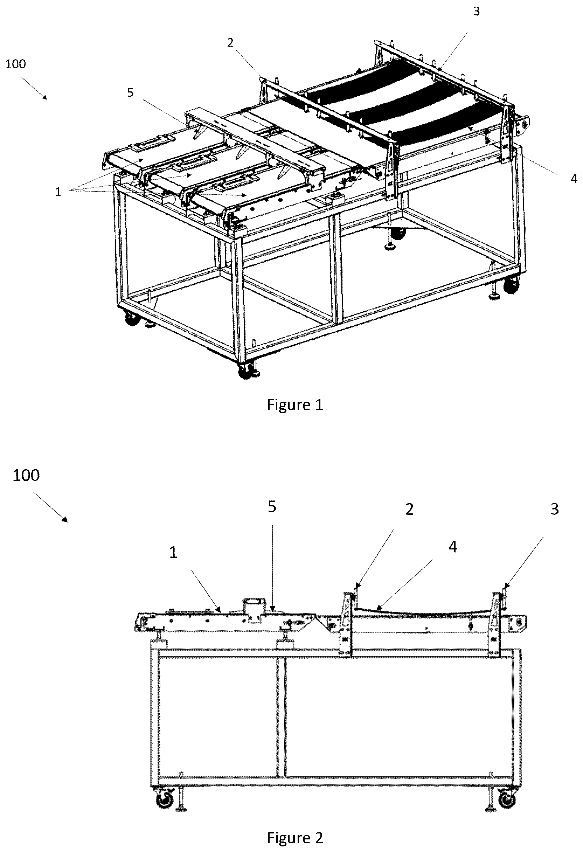

Figure 1 - Perspective view of the dough rolling device (100) of the present invention, comprising three conveyor belts (1), three guides (5), a first support frame (2), a second support frame (3) and three rolling mats (4), each comprising a plurality of rollers.
Figure 2 - Side view of the dough rolling device (100) of the present invention.

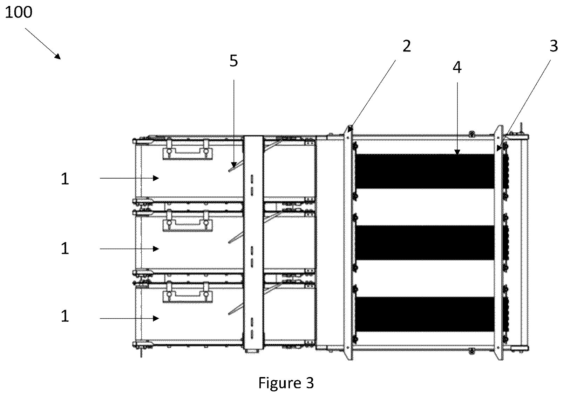

Figure 3 - Top view of the dough rolling device (100) of the present invention.

### DETAILED DESCRIPTION

The more general and advantageous configurations of the present invention are described in the Summary of the Invention. Such configurations are detailed below in accordance with other advantageous and/or preferred embodiments of implementation of the present invention.

In another embodiment of the present invention, the top surface of the conveyor belt (1) comprises a plurality of guide marks to mark the position of the dough sheets, thus facilitating the positioning of the dough sheet onto the conveyor belt (1) by the operator. The guide marks can be embedded into the material of the conveyor belt (1) or projected onto the surface of the conveyor belt (1) by projection means, so that the operator is provided with a visual guide to correctly position the dough sheet prior to the rolling action.

In an advantageous aspect of the present invention, each guide mark is positioned at an angle between 20° and 60° in relation to the direction of the motion provided by the conveyor belt (1), so that the dough sheet is diagonally positioned along the conveyor belt (1) at an optimal angle for rolling the dough sheet to fully envelop the filling bar and obtain the final product.

In a preferred embodiment of the present invention, the dough rolling device (100) comprises a control unit configured to adjust the speed of the conveyor belt (1) and the rotational direction and speed of the plurality of rollers.

In another embodiment of the present invention, the first support frame (2) comprises an adjustable support mechanism configured to adjust the height of the first bar, so that the size of the gap formed between the plurality of rollers and the surface of the conveyor belt (1) can be adjusted. Alternatively, the second support frame (3) may also comprise an adjustable support mechanism configured to adjust the height of the second bar, adjust the size of the gap formed between the plurality of rollers and the surface of the conveyor belt (1).

In an advantageous aspect of the present invention, the adjustable support mechanism allows the first and/or the second bar to be lowered or raised, thus changing the size of the gap through which the dough product to be rolled will pass, thereby changing the rolling force exerted in the dough product as it passes through the rollers of the rolling mat (4). This feature allows the fine-tuning of the rolling force depending on the properties of the dough, to ensure a high quality of the enveloped dough product and consistency throughout mass production operation.

In another embodiment of the present invention, the rollers are positioned in a uniformly spaced configuration to enable uniform rolling along the length of the filling bar.

It is also an object of the present invention a method for the production of enveloped dough product containing a filling therein, comprising the following steps:
- placing a sheet of dough on the conveyor belt (1);
- depositing a filling bar on top of the sheet of dough;
- manually fold the sheet of dough once over the filling bar so that the filling bar is partially encased by said sheet of dough;
- driving the sheet of dough and filling bar along the conveyor belt (1) towards the rolling mat (4);
- rolling the sheet of dough over the filling bar at the rolling station by means of a plurality of rollers positioned over the conveyor belt (1) surface, being said rollers configured to rotate in a direction opposite to the conveyor belt (1) movement;
- fully enveloping the filling bar within the sheet of dough by continuous rolling as the dough and filling bar progress through the rolling mat (4); and
- manually seal the seams located at the ends of the fully enveloped dough product so as to obtain the final enveloped dough product containing a filling therein.

In a preferred embodiment, the method for the production of enveloped dough product containing a filling therein, comprise the following steps:
- placing a sheet of dough on the conveyor belt (1);
- depositing a filling bar on top of the sheet of dough;
- manually fold the sheet of dough once over the filling bar so that the filling bar is partially encased by said sheet of dough;
- driving the sheet of dough and filling bar along the conveyor belt (1) towards the rolling mat (4);
- displacing the sheet of dough in a diagonal direction in relation to the direction of movement of the conveyor belt (1) by means of a guide (5);
- rolling the sheet of dough over the filling bar at the rolling mat (4) by means of a plurality of rollers positioned over the conveyor belt (1) surface, being said rollers configured to rotate in a direction opposite to the conveyor belt (1) movement;
- fully enveloping the filling bar within the sheet of dough by continuous rolling as the dough and filling bar progress through the rolling mat (4); and
- manually seal the seams located at the ends of the fully enveloped dough product so as to obtain the final enveloped dough product containing a filling therein.

In addition, the method for the production of enveloped dough product containing a filling therein may comprise the step of adjusting the speed of the conveyor belt (1) or adjusting the speed and rotational direction of the rollers.

In an advantageous aspect of the present invention, the method for the production of enveloped dough product containing a filling therein may comprise the step of adjusting the height of the first and/or the second bar to increase or decrease the size of the gap formed between the plurality of rollers and the surface of the conveyor belt (1).

Of course, the preferred embodiments shown above are combinable, in different possible configurations, being the present invention not limited to the embodiments previously described.

## Claims

1. A dough rolling device (100) for the production of enveloped dough product containing a filling therein, comprising at least one conveyor belt (1) configured to support and drive a sheet of dough containing a filling bar placed on top of said sheet of dough, said filling bar being partially encased by said sheet of dough; at least one first support frame (2); at least one a second support frame (3); and at least one rolling mat (4) positioned downstream along the at least one conveyor belt (1), comprising a plurality of rollers, said rollers being placed over the surface of the conveyor belt (1) on a flexible frame, wherein:
- the at least one conveyor belt (1) extends continuously beneath the plurality of rollers of the at least one rolling mat (4), in that the dough product is both rolled and transported simultaneously through said rolling mat (4);
- the at least one conveyor belt (1) drives the sheet of dough and filling bar along its length to the at least one rolling mat (4);
- the plurality rollers are configured to roll the sheet of dough over the filling bar in a direction opposite to the movement driven by the conveyor belt (1), thereby forming an enveloped structure around the filling bar;
- the first support structure is positioned at a proximal end of the rolling mat (4) and comprises a first bar; and the second support structure is positioned at a distal end of the rolling mat (4) and comprises a second, being said first bar and said second bar configured to support the first end bar to support the flexible frame of the rolling mat (4); and
- the first and second bar are positioned perpendicularly to the length of the at least one conveyor belt (1) and are positioned over the surface of said conveyor belt (1) so that a gap is formed between the plurality of rollers and the surface of the at least one conveyor belt (1).

2. A dough rolling device (100) according to claim 1 comprising at least one guide (5) positioned downstream along the at least one conveyor belt (1) and prior to the at least one rolling mat (4), said guide (5) being configured to diagonally displace the sheet of dough in relation to the direction of the motion provided by said conveyor belt (1).

3. A dough rolling device (100) according to claim 1 wherein a top surface of said conveyor belt (1) comprises a plurality of guide marks.

4. A dough rolling device (100) according to claim 3 wherein each guide mark is positioned at an angle between 20° and 60° in relation to the direction of the motion provided by the conveyor belt (1).

5. A dough rolling device (100) according to any of the previous claims wherein the plurality of rollers is configured to apply a rolling force to the sheet of dough and filling bar to facilitate a continuous wrapping of the sheet of dough around the filling bar as it advances along the conveyor belt (1).

6. A dough rolling device (100) according to any of the previous claims comprising a control unit configured to adjust the speed of the conveyor belt (1) and the rotational direction and speed of the plurality of rollers.

7. A dough rolling device (100) according to any of the previous claims wherein the first support frame (2) comprises an adjustable support mechanism configured to adjust the height of the first bar, so that the size of the gap formed between the plurality of rollers and the surface of the conveyor belt (1) is adjusted.

8. A dough rolling device (100) according to any of the previous claims wherein the second support frame (3) comprises an adjustable support mechanism configured to adjust the height of the second bar, so that the size of the gap formed between the plurality of rollers and the surface of the conveyor belt (1) is adjusted.

9. A dough rolling device (100) according to any of the previous claims wherein the rollers are positioned in a uniformly spaced configuration to enable uniform rolling along the length of the filling bar.

10. A method for the production of enveloped dough product containing a filling therein, according to claim 1 comprising the following steps:
- placing a sheet of dough on the conveyor belt (1);
- depositing a filling bar on top of the sheet of dough;
- manually fold the sheet of dough once over the filling bar so that the filling bar is partially encased by said sheet of dough;
- driving the sheet of dough and filling bar along the conveyor belt (1) towards the rolling mat (4);
- rolling the sheet of dough over the filling bar at the rolling station by means of a plurality of rollers positioned over the conveyor belt (1) surface, being said rollers configured to rotate in a direction opposite to the conveyor belt (1) movement;
- fully enveloping the filling bar within the sheet of dough by continuous rolling as the dough and filling bar progress through the rolling mat (4); and
- manually seal the seams located at the ends of the fully enveloped dough product so as to obtain the final enveloped dough product containing a filling therein.

11. The method according to claim 2, comprising the following steps:
- placing a sheet of dough on the conveyor belt (1);
- depositing a filling bar on top of the sheet of dough;
- manually fold the sheet of dough once over the filling bar so that the filling bar is partially encased by said sheet of dough;
- driving the sheet of dough and filling bar along the conveyor belt (1) towards the rolling mat (4);
- displacing the sheet of dough in a diagonal direction in relation to the direction of movement of the conveyor belt (1) by means of a guide (5);
- rolling the sheet of dough over the filling bar at the rolling mat (4) by means of a plurality of rollers positioned over the conveyor belt (1) surface, being said rollers configured to rotate in a direction opposite to the conveyor belt (1) movement;
- fully enveloping the filling bar within the sheet of dough by continuous rolling as the dough and filling bar progress through the rolling mat (4); and
- manually seal the seams located at the ends of the fully enveloped dough product so as to obtain the final enveloped dough product containing a filling therein.

12. The method according to claim 6, further comprising the step of adjusting the speed of the conveyor belt (1).

13. The method according to claim 6, further comprising the step of adjusting the speed and rotational direction of the plurality of rollers.

14. The method according to claims 7 - 8, further comprising the step of adjusting the height of the first and/or the second bar to increase or decrease the size of the gap formed between the plurality of rollers and the surface of the conveyor belt (1).
